# EUROPÄISCHE PATENTSCHRIFT

(11) **EP 0 590 469 B1**
(45) Veröffentlichungstag und Bekanntmachung des Hinweises auf die Patenterteilung: **02.08.1995**
(21) Anmeldenummer: 93115132.8
(22) Anmeldetag: 21.09.1993
(51) Int. Cl.: B29C 61/06, B29C 63/42, H02G 15/18

(54) **Rückstellbarer rohrförmiger Gegenstand zum Umhüllen von Substraten, insbesondere zum Umhüllen von Kabelspleissen, Kabelenden etc.**
Tubular shrinkable article for covering substrates, especially for covering cable splices, cable ends, etc.
Objet tubulaire rétractable pour le recouvrement de substrats, en particulier d'épissures de cables, d'extrémités de cables, etc.

(30) Priorität: 02.10.1992 DE 4233202
(43) Veröffentlichungstag der Anmeldung: 06.04.1994
(73) Patentinhaber: kabelmetal electro GmbH, 30179 Hannover (DE)
(72) Erfinder: Grajewski, Franz, Dr.-Ing., D-31655 Stadthagen (DE)

(56) Entgegenhaltungen:
- DE-A- 2 647 122
- FR-A- 2 112 918
- GB-A- 2 018 527
- PATENT ABSTRACTS OF JAPAN vol. 8, no. 20 (M-271)(1457) 27. Januar 1984 & JP-A-58 179 634 (SUMITOMO DENKI KOGYO K.K.) 20. Oktober 1983

## Beschreibung

Die Erfindung betrifft einen in seinen Dimensionen rückstellbaren rohrförmigen Gegenstand zum Umhüllen von Substraten, insbesondere zum Umhüllen von Kabelspleißen, Kabelenden etc., bestehend aus einem in radialer Richtung aufgeweiteten Rohr aus gummielastischem Werkstoff, welches durch ein mit der äußeren Oberfläche des Rohres verbundenes Spannmittel aus einem thermoplastischen Kunststoff im aufgeweiteten Zustand gehalten wird, welches zum Zweck der Rückstellung des Gegenstandes von der Oberfläche des Rohres abziehbar ist.

Für die Umhüllung von Gegenständen sind sog. Kaltschrumpferzeugnisse bekanntgeworden, die überall dort bevorzugt eingesetzt werden, wo Wärme bzw. eine offene Flamme unerwünscht ist.

Ein solcher Kaltschrumpfartikel ist aus der US-PS 3 515 798 bekannt. Der Artikel besteht aus einem Gummischlauch, der durch eine im Innern des Gummischlauches befindliche Drahtwendel im aufgeweiteten Zustand gehalten wird. Durch Herausziehen der Drahtwendel schrumpft der Gummischlauch auf den zu umhüllenden Gegenstand.

Aus der DE-OS 26 47 122 ist ein Schlauch aus einem vernetzten elastomeren Isoliermaterial bekannt, welcher durch ein auf die äußere Oberfläche des Schlauches aufgebrachtes Spannmittel im aufgeweiteten Zustand gehalten wird. Das Spannmittel ist fest mit der Oberfläche des aufgeweiteten Schlauches verbunden, kann jedoch zum Zweck des Schrumpfens von der Oberfläche des Schlauches gelöst bzw. entfernt werden. Zu diesem Zweck kann die Verbindung zwischen dem Schlauch und dem Spannmittel aufgehoben werden, z.B. durch ein die Klebeverbindung lösendes Lösungsmittel, bzw. das Spannmittel von der Oberfläche entfernt werden, z.B. durch Zertrümmern oder durch wendelartiges Abschälen von Streifen. Für den letztgenannten Fall ist eine Schicht aus einem thermoplastischen Kunststoff auf den Schlauch in Form einer rohrartigen Hülle aufextrudiert, die für den Fall der Zertrümmerung aus einem harten Kunststoff besteht bzw. bei der für den Fall des Abschälens in deren Oberfläche wendelartig verlaufende Sollbruchstellen eingearbeitet sind.

Die Verwendung von Spannmitteln aus hartem sprödem Kunststoff schränkt die Anwendung stark ein, da der Gegenstand nicht biegbar ist. Darüberhinaus besteht die Gefahr, daß z.B. bei einer schlagartigen Beanspruchung die Spannmittel u.U. ungewollt zerstört werden, wodurch der Gegenstand unbrauchbar wird.

Das nachträgliche Einarbeiten der Sollbruchstellen ist ein zusätzlicher Arbeitsgang, der den Gegenstand verteuert.

Aus der FR-A-2 112 918 ist ein Verfahren zum Beschichten eines zylindrischen Körpers mit Kunstharz bekannt, bei welchem ein Kunststoffstreifen extrudiert und auf die Oberfläche des rotierenden Zylinders aufgewickelt wird. Mittels einer Rolle wird der Kunststoffstreifen fest auf die Oberfläche des Zylinders gedrückt, um Luftblasen zwischen dem Kunststoffstreifen und der Oberfläche des Zylinders zu vermeiden. Durch den von der Rolle aufgebrachten Druck verbinden sich die einzelnen Windungen des Kunststoffstreifens zu einer homogenen mit der Oberfläche des Zylinders fest verbundenen Kunststoffschicht.

Der Erfindung liegt die Aufgabe zugrunde, einen in seinen Dimensionen rückstellbaren Gegenstand anzugeben, bei welchem die Bindung zwischen dem aufgeweiteten Rohr und dem Spannmittel nicht durch ungewollte schlagartige Beanspruchung aufgehoben wird und welcher kostengünstig herstellbar ist.

Diese Aufgabe wird bei einem Gegenstand der eingangs erwähnten Art dadurch gelöst, daß das Spannmittel ein wendelartig auf das aufgeweitete Rohr aufgebrachtes Profil ist. Ein solcher Gegenstand läßt sich ohne großen apparativen Aufwand herstellen. Ein weiterer wesentlicher Vorteil ist, daß das Profil sukzessive von der Oberfläche des Schlauches abgeschält werden kann und der Schlauch in gleichem Maß auf das zu umhüllende Substrat geschrumpft wird.

Um den aufgeweiteten Zustand auch über einen längeren Zeitpunkt aufrechterhalten zu können, hat es sich als vorteilhaft erwiesen, daß die äußere Oberfläche des Rohres und/oder die dem Rohr zugekehrte Oberfläche des Profils mit einem Kleber beschichtet sind. Dieser Kleber sollte so beschaffen sein, daß bei einer Scherbelastung, wie sie beim Abziehen bzw. Abschälen des Profils auftritt, die Bindung zwischen Rohr und Profil aufgehoben wird. Zweckmäßigerweise ist der Kleber ein Heißschmelzkleber. Gleichermaßen ist auch ein Kontaktkleber verwendbar. Die Auswahl des Klebers wird bestimmt durch die Verfahrenstechnik zur Herstellung des Gegenstandes, worauf weiter unten näher eingegangen wird.

Insbesondere wenn der Gegenstand als sogenannter Endverschluß für Mittel- oder Hochspannungskabel eingesetzt werden soll, hat es sich als vorteilhaft erwiesen, daß der Gegenstand an seiner inneren Oberfläche eine schwach leitfähige Schicht aufweist.

Bei dem Profil handelt es sich zweckmäßigerweise um ein solches mit nahezu quadratischem Querschnitt. Ein solches Profil ist in sich stabil und kann die von dem elastisch aufgeweiteten Schlauch ausgehenden Kräften aufnehmen und liegt darüberhinaus großflächig auf dem Schlauch auf. Das Profil sollte dabei die Oberfläche des Schlauches nahezu vollständig bedecken.

Die Erfindung betrifft weiterhin ein Verfahren zur Herstellung eines in seinen Dimensionen rückstellbaren Gegenstandes, bei welchem ein Rohr aus elastomerem Werkstoff radial aufgeweitet wird und auf das aufgeweitete Rohr das Spannmittel aufgebracht wird, wie es aus der DE-A-2 647 122 bekannt ist. Gemäß der Erfindung wird bei diesem Verfahren das Spannmittel wendelartig auf die Oberfläche des radial aufgeweiteten Rohres aufgetragen und nach Herstellung der Verbindung zwischen Rohr und Spannmittel die die Aufweitung bewirkende Maßnahme abgebrochen.

Wenn das Spannmittel ein Strang aus thermoplastischem Kunststoff ist, der auf das aufgeweitete Rohr aufgewickelt wird, ist es zweckmäßig, den Strang mit leichtem Zug aufzuwickeln. Nach dem Wickelvorgang wird der bewickelte Gegenstand auf eine Temperatur erwärmt, bei welcher ein auf die Oberfläche des Rohres und/oder die dem Rohr zugekehrte Oberfläche des Stranges aufgebrachter Heißschmelzkleber zum Schmelzen gebracht wird. Abschließend wird der Heißschmelzkleber abgekühlt und dadurch die Verbindung zwischen aufgeweitetem Rohr und dem Strang hergestellt. Eine nachträgliche Aufwärmung kann entfallen, wenn die Heißschmelzkleberschicht beim Wickelvorgang z.B. durch Erwärmen der Oberfläche des aufgeweiteten Rohres flüssig ist.

Bei der Verwendung eines Kontaktklebers wird die Verbindung zwischen dem Rohr und dem Strang durch Aufbringen von Druck, z.B. durch Aufbringen des Profils bzw. Stranges unter Zug verbessert.

Vorteilhaft ist ein Verfahren, bei welchem auf das aufgeweitete Rohr ein Strang aus thermoplastischem Kunststoff mit nahezu vollständiger Bedeckung aufextrudiert wird, wobei das Rohr um seine Längsachse gedreht und in längsaxialer Richtung bewegt wird und daß nach dem Erhärten des Stranges die die Aufweitung des Rohres bewirkende Maßnahme abgebrochen wird.

Die Bindung zwischen Rohr und Strang wird verbessert, wenn vor der Extrusion des Stranges auf die äußere Oberfläche des aufgeweiteten Rohres eine Schicht aus Heißschmelzkleber aufgebracht wird.

Für manche Anwendungsfälle ist es vorteilhaft, wenn der Strang aus einem thermoplastischen Heißschmelzkleber besteht. Beim Aufbringen ist dann jedoch darauf zu achten, daß benachbarte Windungen des Stranges nicht miteinander verkleben.

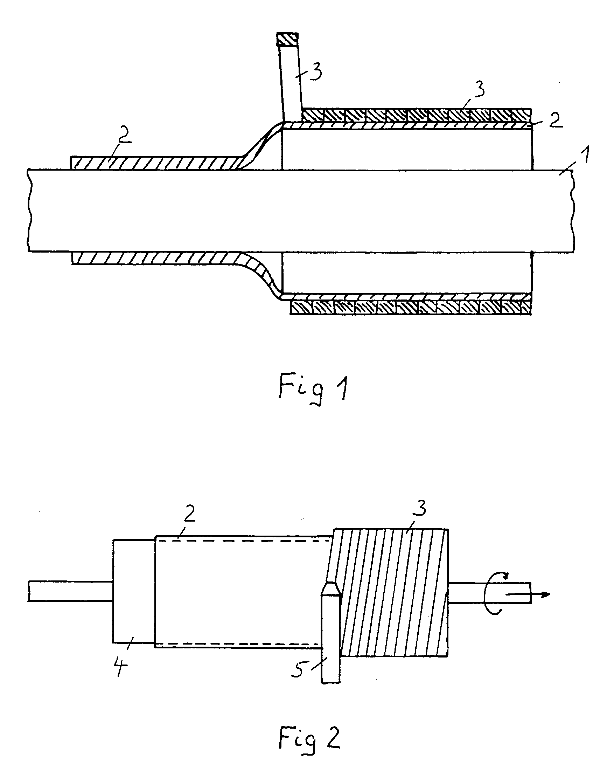

Die Erfindung ist anhand der in den Figuren 1 und 2 schematisch dargestellten Ausführungsbeispiele näher erläutert.

Zum Umhüllen eines Substrates 1 wird über das Substrat 1 ein radial aufgeweiteter Schlauch 2, dessen aufgeweiteter Zustand durch ein wendelartig auf der Oberfläche des Schlauches 2 befindliches und mit der Oberfläche verklebtes Profil 3 aufrechterhalten wird. Das Profil 3 ist zweckmäßigerweise ein im Querschnitt nahezu quadratisches Profil und bedeckt die Oberfläche des aufgeweiteten Schlauches 2 nahezu vollständig. Wenn das Profil 3 von dem Schlauch 2 abgewickelt wird, bildet sich der Schlauch 2 elastisch zurück und legt sich auf das Substrat 1 auf (siehe linke Hälfte der Figur 1). Als Material für den Schlauch 2 eignet sich nahezu jeder elastisch verformbare, d.h. aufweitbare Werkstoff, wie z.B. EPDM, Neopren etc.. Für das Profil 3 eignet sich ein thermoplastischer Kunststoff, wie z.B. Polyethylen. Die Verbindung zwischen dem Schlauch 2 und dem Profil 3 muß so stark sein, daß eine Rückstellung des Schlauches 2, ohne daß das Profil 3 entfernt wurde, vermieden ist. Für manche Anwendungsfälle ist es von Vorteil, die Bindung durch eine zwischen Schlauch 2 und Profil 3 befindliche Schicht aus Heißschmelz- oder Kontaktkleber herzustellen. Diese Maßnahme ist erforderlich, wenn das Profil 3 auf den Schlauch 2 aufgewickelt wird. Bei einer Extrusion des Profils 3 direkt auf den aufgeweiteten Schlauch 2 kann eine Kleberschicht bei geeigneter Materialkombination entbehrlich sein.

In der Figur 2 ist eines der möglichen Herstellungsverfahren schematisch dargestellt.

Der Schlauch 2 befindet sich im aufgeweitetem Zustand auf einem Dorn 4. Mittels eines Extruders 5 wird das Profil 3 auf den Schlauch 2 extrudiert. Dabei wird der Dorn 4 um seine Längsachse entsprechend der Extrusionsgeschwindigkeit gedreht und gleichzeitig in längsaxialer Richtung bewegt, wogegen der Extruder 5 feststeht. Bei dieser Fertigungsmethode wird eine gute Verbindung zwischen dem Schlauch 2 und dem Profil 3 erzielt.

Die Erfindung beschränkt sich nicht auf die dargestellten Ausführungsbeispiele. Vielmehr ist es möglich, das Profil 3 auf einen nahezu unendlich langen schlauch 2 in einem kontinuierlichen Arbeitsprozeß aufzubringen. In diesem Fall ist nur eine Bewicklung mit einem umlaufenden Wickler möglich.

## Patentansprüche

1. In seinen Dimensionen rückstellbarer rohrförmiger Gegenstand zum Umhüllen von Substraten (1), insbesondere zum Umhüllen von Kabelspleißen, Kabelenden etc., bestehend aus einem in radialer Richtung aufgeweiteten Rohr (2) aus gummielastischem Werkstoff, welches durch ein mit der äußeren Oberfläche des Rohres (2) verbundenes Spannmittel (3) aus einem thermoplastischen Kunststoff im aufgeweiteten Zustand gehalten wird, welches zum Zweck der Rückstellung des Gegenstandes von der Oberfläche des Rohres (2) abziehbar ist, dadurch gekennzeichnet, daß das Spannmittel ein wendelartig auf das aufgeweitete Rohr (2) aufgebrachtes Profil (3) ist.

2. Gegenstand nach Anspruch 1, dadurch gekennzeichnet, daß die äußere Oberfläche des Rohres (2) und/oder die dem Rohr (2) zugekehrte Oberfläche des Profils (3) mit einem Kleber beschichtet sind.

3. Gegenstand nach Anspruch 2, dadurch gekennzeichnet, daß der Kleber ein Heißschmelzkleber ist.

4. Gegenstand nach Anspruch 2, dadurch gekennzeichnet, daß der Kleber ein Kontaktkleber ist.

5. Gegenstand nach einem der Ansprüche 1 bis 4, dadurch gekennzeichnet, daß der Gegenstand an seiner inneren Oberfläche eine schwach leitfähige Schicht aufweist.

6. Gegenstand nach einem der Ansprüche 1 bis 5, dadurch gekennzeichnet, daß das Profil (3) ein im Querschnitt quadratisches Profil ist.

7. Gegenstand nach einem der Ansprüche 1 bis 6, dadurch gekennzeichnet, daß das Profil (3) die Oberfläche des Rohres (2) nahezu vollständig bedeckt.

8. Verfahren zur Herstellung eines Artikels nach einem der Ansprüche 1 bis 7, bei welchem ein Rohr (2) aus elastomerem Werkstoff radial aufgeweitet wird und auf das aufgeweitete Rohr (2) das Spannmittel (3) aufgebracht wird, dadurch gekennzeichnet, daß das Spannmittel (3) wendelartig auf die Oberfläche des radial aufgeweiteten Rohres (2) aufgetragen und nach Herstellung der Verbindung zwischen Rohr (2) und Spannmittel (3) die, die Aufweitung bewirkende Maßnahme abgebrochen wird.

9. Verfahren nach Anspruch 8, dadurch gekennzeichnet, daß auf die Oberfläche des aufgeweiteten Rohres (2) ein Strang (3) aus thermoplastischem Material mit nahezu vollständiger Bedeckung aufgewickelt wird, daß beim Wickeln ein leichter Zug auf den Strang (3) ausgeübt wird, daß nach dem Wickeln der bewickelte Gegenstand (2,3) auf eine Temperatur erwärmt wird, bei welcher ein auf die Oberfläche des Rohres (2) und/oder die dem Rohr (2) zugekehrte Oberfläche des Stranges (3) aufgebrachter Heißschmelzkleber zum Schmelzen gebracht wird und daß abschließend der Heißschmelzkleber abgekühlt wird.

10. Verfahren nach Anspruch 8, dadurch gekennzeichnet, daß auf das aufgeweitete Rohr (2) ein Strang (3) aus thermoplastischem Kunststoff mit nahezu vollständiger Bedeckung aufgewickelt wird und daß die Verbindung zwischen Rohr (2) und Strang (3) durch Aufbringen von Druck mittels eines Kontaktklebers erfolgt.

11. Verfahren nach Anspruch 8, dadurch gekennzeichnet, daß auf ein aufgeweitetes Rohr (2) ein Strang (3) aus thermoplastischem Kunststoff mit nahezu vollständiger Bedeckung aufextrudiert wird, wobei das Rohr (2) um seine Längsachse gedreht wird, und daß nach dem Erhärten des Stranges (3) die, die Aufweitung des Rohres (2) bewirkende Maßnahme abgebrochen wird.

12. Verfahren nach Anspruch 11, dadurch gekennzeichnet, daß vor der Extrusion des Stranges (3) auf die äußere Oberfläche des aufgeweiteten Rohres (2) eine Schicht aus Heißschmelzkleber aufgebracht wird.

## Claims

1. Tubular article which can recover its dimensions, for sheathing substrates (1), in particular for sheathing cable splices, cable ends etc., comprising a tube (2) of elastomeric material which is expanded in the radial direction and is kept in the expanded state by bracing means (3) of a thermoplastic material which is connected to the outer surface of the tube (2) and, for the purpose of recovery of the article, can be drawn off the surface of the tube (2), characterized in that the bracing means is a profile (3) applied helically to the expanded tube (2).

2. Article according to Claim 1, characterized in that the outer surface of the tube (2) and/or the surface of the profile (3) facing the tube (2) are coated with an adhesive.

3. Article according to Claim 2, characterized in that the adhesive is a hot-melt adhesive.

4. Article according to Claim 2, characterized in that the adhesive is a contact adhesive.

5. Article according to one of Claims 1 to 4, characterized in that the article has on its inner surface a weakly conductive layer.

6. Article according to one of Claims 1 to 5, characterized in that the profile (3) is a cross-sectionally square profile.

7. Article according to one of Claims 1 to 6, characterized in that the profile (3) covers the surface of the tube (2) virtually completely.

8. Process for producing an article according to one of Claims 1 to 7, in which a tube (2) of elastomeric material is radially expanded and the bracing means (3) is applied to the expanded tube (2), characterized in that the bracing means (3) is applied helically to the surface of the radially expanded tube (2) and, after establishing the connection between tube (2) and clamping means (3), the measure effecting the expansion is discontinued.

9. Process according to Claim 8, characterized in that a strand (3) of thermoplastic material is wound onto the surface of the expanded tube (2) with virtually complete coverage, in that during winding a slight tension is exerted on the strand (3), in that, after winding, the wound article (2, 3) is heated to a temperature at which a hot-melt adhesive applied to the surface of the tube (2) and/or to the surface of the strand (3) facing the tube (2) is made to melt and in that finally the hot-melt adhesive is cooled.

10. Process according to Claim 8, characterized in that a strand (3) of thermoplastic material is wound onto the expanded tube (2) with virtually complete coverage and in that the connection between tube (2) and strand (3) takes place by means of a contact adhesive by applying pressure.

11. Process according to Claim 8, characterized in that a strand (3) of thermoplastic material is extruded onto an expanded tube (2) with virtually complete coverage, the tube (2) being turned about its longitudinal axis, and in that, after the setting of the strand (3), the measure effecting the expansion of the tube (2) is discontinued.

12. Process according to Claim 11, characterized in that, before the extrusion of the strand (3), a layer of hot-melt adhesive is applied to the outer surface of the expanded tube (2).

## Revendications

1. Objet tubulaire, rétractable en ses dimensions, pour envelopper des substrats (1), en particulier pour envelopper des raccordements de câble, des extrémités de câble etc., constitué d'un tube (2), en matériau à élasticité de type caoutchouc, qui est expansé en direction radiale et qui est maintenu en l'état expansé par un moyen (3) de mise sous tension, en matériau thermoplastique, qui est lié à la surface extérieure du tube (2) et peut se détacher de la surface du tube (2) aux fins de rétraction de l'objet, caractérisé par le fait que le moyen de mise sous tension est un profilé (3) en forme de spirale, appliqué sur le tube expansé (2).

2. Objet selon la revendication 1, caractérisé par le fait que la surface extérieure du tube (2) et/ou la surface du profilé (3) orientée vers le tube (2) sont revêtues d'une colle.

3. Objet selon la revendication 2, caractérisé par le fait que la colle est une colle fondant à chaud.

4. Objet selon la revendication 2, caractérisé par le fait que la colle est une colle de contact.

5. Objet selon l'une des revendications 1 à 4, caractérisé par le fait que, sur sa surface intérieure, l'objet présente une couche faiblement conductrice.

6. Objet selon l'une des revendications 1 à 5, caractérisé par le fait que le profilé (3) est un profilé de section carrée.

7. Objet selon l'une des revendications 1 à 6, caractérisé par le fait que le profilé (3) recouvre presqu'entièrement la surface du tube (2).

8. Procédé de fabrication d'un article selon l'une des revendications 1 à 7, dans le cas duquel on expanse radialement un tube (2) en matériau élastomère et on applique sur le tube (2), expansé, le moyen (3) de mise sous tension, caractérisé par le fait que l'on applique le moyen (3) de mise sous tension en forme de spirale sur la surface du tube (2) expansé radialement et qu'après réalisation de la liaison entre tube (2) et moyen (3) de mise sous tension, on interrompt la mesure opérant l'expansion.

9. Procédé selon la revendication 8, caractérisé par le fait que sur la surface du tube expansé (2) on bobine un boudin (3) de matériau plastique à recouvrement presque complet, que, lors du bobinage, on exerce une légère traction sur le boudin (3), qu'après le bobinage on chauffe l'objet bobiné (2,3) pour le porter à une température à laquelle une colle fondant à chaud, appliquée sur la surface du tube (2) et/ou sur la surface du boudin (3) orientée vers le tube (2), est portée à la fusion et qu'ensuite on refroidit la colle fondant à chaud.

10. Procédé selon la revendication 8, caractérisé par le fait que sur le tube expansé (2) on bobine un boudin (3) d'un matériau thermoplastique à recouvrement presque complet et que la liaison entre tube (2) et boudin (3) se fait par application d'une pression au moyen d'une colle de contact.

11. Procédé selon la revendication 8, caractérisé par le fait que sur un tube expansé (2) on extrude un boudin (3) d'un matériau thermoplastique à recouvrement presque complet, le tube (2) tournant autour de son axe longitudinal, et qu'après le durcissement du boudin (3) on interrompt la mesure opérant l'expansion du tube (2).

12. Procédé selon la revendication 11, caractérisé par le fait qu'avant l'extrusion du boudin (3) sur la surface extérieure du tube expansé (2) on applique une couche d'une colle fondant à chaud.
